# EUROPEAN PATENT APPLICATION

(11) **EP 4 675 758 A1**
(43) Date of publication of application: **07.01.2026**
(21) Application number: 24186610.2
(22) Date of filing: 04.07.2024
(51) Int. Cl.: H01M 10/613, H01M 10/6554, H01M 10/6556, H01M 50/209, H01M 50/244, H01M 50/258, H01M 50/284, H01M 50/298, H01R 4/26

(54) **BATTERY MODULE, ASSEMBLY OF A BATTERY MODULE AND AN INTERFACE PLATE, AND BATTERY PACK COMPRISING THE BATTERY MODULE AND ASSEMBLY**

(71) Applicant: KB Intellectual Property GmbH & Co. KG, 82049 Pullach (DE)
(72) Inventor: Birkás, Balázs Viktor, 1115 Budapest (HU); Egri, Bálint, 4150 Püspökladány (HU); Kiss, Dávid, 2066 Szár (HU); Mlinárcsek, Csaba, 1165 Budapest (HU); Soós, Bence, 6000 Kiskunfélegyháza (HU); Urban, Matyas, 2638 Kemence (HU)

(57) **Abstract**

A battery module (1) comprises battery cells (3), a module housing (2) having a upper and lower side and accommodating the battery cells (3), and a first module upper connector (4) and a second module upper connector (5) connected to the battery cells (3), a first module lower connector (6) connected to the first module upper connector (4), and a second module lower connector (7) connected to the second module upper connector (5). A first module upper connector location horizontally corresponds to a first module lower connector location and a second module upper connector location horizontally correspond to a second module lower connector location. The first module upper connector (4) fits to the first (6) and second (7) module lower connector to create contact, and the second module upper connector (5) fits to the second module lower connector (7) to create contact.

## Description

The invention relates to a battery module, an assembly of a battery module and an interface plate, and a battery pack comprising the battery module and the assembly, in particular, for secondary batteries.

Secondary batteries have attracted much attention as an environment-friendly energy source for use in electric vehicles. Recently, along with the continuous rise of the necessity for a large-capacity secondary battery structure, including the utilization of the secondary battery as an energy storage, there is an increased demand for battery module structures in which a plurality of battery cells are stacked and electrically connected in the battery modules to provide specific voltage and current requirements desired, e.g., in an electric or hybrid vehicle.

However, presently available battery modules include many compromises. The modules are built together in horizontal or vertical configurations and shapes of others than of these configurations can only be solved with elaborate extra components which increases costs and installation time.

Further, if batteries of a different size or batteries with different electric properties, e.g., 24 V, 48V or LTO, NMC or LFP cell or other technology, are to be integrated into a battery module, a completely new product, i.e., a battery pack, should be developed for each specific battery system functionality, which is time consuming and expensive.

Further, a necessary thermal management cannot be achieved in a modular way.

Therefore, the object underlying the invention is to provide a battery pack which can be easily configured for providing different voltages and capacities without additional design efforts.

The object is achieved by a battery module according to claim 1, an assembly of a battery module and an interface plate according to claim 6 and battery packs according to claim 7 and 8. Advantageous further developments are included in the dependent claims.

According to an aspect of the invention, a battery module comprises battery cells, a module housing having a horizontal upper side and a horizontal lower side and accommodating the battery cells stacked side-by-side in a horizontal direction, and, on the horizontal upper side of the module housing, a first module upper connector and a second module upper connector respectively connected to the battery cells and configured to provide a voltage of the battery module, and, on the horizontal lower side of the module housing, a first module lower connector, electrically connected to the first module upper connector and a second module lower connector electrically connected to the second module upper connector. The first module upper connector is placed in a first module upper connector location and the second module upper connector is placed in a second module upper connector location, the first module lower connector is placed in a first module lower connector location and the second module lower connector is placed in a second module lower connector location, the first module upper connector location horizontally corresponds to the first module lower connector location and the second module upper connector location horizontally corresponds to the second module lower connector location. Further, the first module upper connector has a shape configured to fit to the first module lower connector and to the second module lower connector to respectively create electrical contact, and the second module upper connector has a shape configured to fit to the second module lower connector to create electrical contact.

Such a battery module is the base for a battery pack which can provide different voltages and/or capacities since a series circuit and a parallel circuit can easily be configured with several of these battery modules by merely rotating one of the battery modules about 180° and providing an according circuit.

According to an advantageous implementation of the battery module, the battery module comprises a cover plate covering the horizontal upper side of the module housing.

In a further advantageous implementation of the battery module, the first module upper connector and the second module upper connector have the shape of a plug and the first module lower connector, and the second module lower connector have the shape of a socket.

Due to a further advantageous implementation of the battery module, it further comprises a cooling plate configured to be in thermal contact with the battery cells, wherein the cooling plate is configured to let pass a heat transfer fluid, and the cooling plate is provided with a pipe fitting, in particular, a quick connector, configured to attach a pipe for flow of the heat transfer fluid.

According to a further advantageous implementation of the battery module, it further comprises a Battery Management System, in the module housing, configured to process signals of sensors of the battery module, a module lower communication connector, connected to the Battery Management System, on the lower side of the module housing in a defined horizontal communication connector location with respect to the first module lower connector and the second module lower connector, and a module upper communication connector, connected to the Battery Management System, on the upper side of the module housing in the same horizontal communication connector location with respect to the first module upper connector and the second module upper connector.

According to a further aspect of the invention, an assembly of the above mentioned battery module with the Battery Management System and an interface plate is provided, wherein the battery module is defined as an assembly battery module, and the interface plate, configured to be mountable on the assembly battery module in a horizontal orientation and having an upper side and a lower side, comprises a plate upper communication connector on the upper side of the interface plate, and a plate lower communication connector on the lower side of the interface plate. The plate upper communication connector is electrically connected to the plate lower communication connector, the plate lower communication connector has a shape configured to fit to the module upper communication connector to create electrical contact and is located in a defined horizontal plate lower communication connector location with respect to the first module upper connector and the second module upper connector, and the plate upper communication connector has a shape configured to fit to the module lower communication connector to create electrical contact and is located in a defined horizontal plate upper communication connector location with respect to the first module lower connector and the second module lower connector, and the horizontal plate upper communication connector location is different from horizontal plate lower communication connector location.

According to a further aspect of the invention, a battery pack of at least two battery modules is provided, wherein the battery modules are arranged one above the other such that the first module upper connector of a lower battery module contacts the first module lower connector of an upper battery module and the second module upper connector of the lower battery module contacts the second module lower connector of the upper battery module such that an electrical parallel circuit is provided in order to increase capacity of the battery pack with respect to a single battery module, and a module upper communication connector of the lower battery module is configured to contact the module lower communication connector of the upper battery module.

According to another aspect of the invention, a battery pack of at least one battery module and at least one assembly is provided, wherein one of the at least one battery modules is arranged on one of the at least one assembly such that the first module upper connector of the assembly battery module is in electrical contact with the second module lower connector of the battery module such that an electrical series circuit is provided in order to increase voltage of the battery pack with respect to a single battery module.

In an advantageous implementation of the battery pack comprising the battery module and the assembly, the interface plate is configured to allow an electrical connection between the first module upper connector of the assembly battery module and the second module lower connector of the battery module.

According to a further advantageous implementation of the battery pack comprising the assembly, the interface plate has an opening at a horizontal location corresponding to the first module upper connector location such that the first module upper connector can penetrate the interface plate.

Due to a further advantageous implementation of the battery pack, the battery pack comprises a further assembly, wherein the further assembly is arranged at the bottom of the battery pack, and the first module upper connector of the further assembly is in electrical contact with the second module lower connector of the assembly on top of the further assembly such that an electrical series circuit is provided in order to further increase voltage of the battery pack.

In a further advantageous implementation of the battery pack, the at least one battery module and the at least one assembly are arranged side by side.

According to a further advantageous implementation of the battery pack, the battery pack comprises a main PCB configured to be in communication with the Battery Management Systems of the battery modules, and configured to charge, discharge, balance, and switch on and off parallel connections of the battery modules.

In a further advantages implementation of the battery pack, the connectors are formed by plug-in connectors.

In a further advantageous implementation of the battery pack, the module housings and/or the interface plates and/or a cover of the main PCB are attached to one another by bolting.

Subsequently, the invention is elucidated by means of embodiments with reference to the attached drawings.

In particular,
- Fig. 1: shows an exploded view of a battery module;
- Fig. 2: shows an exploded view of a configuration of a battery pack; and
- Fig. 3: shows an exploded view of a configuration of the battery pack of Fig. 2 depicting components of a thermal management system.

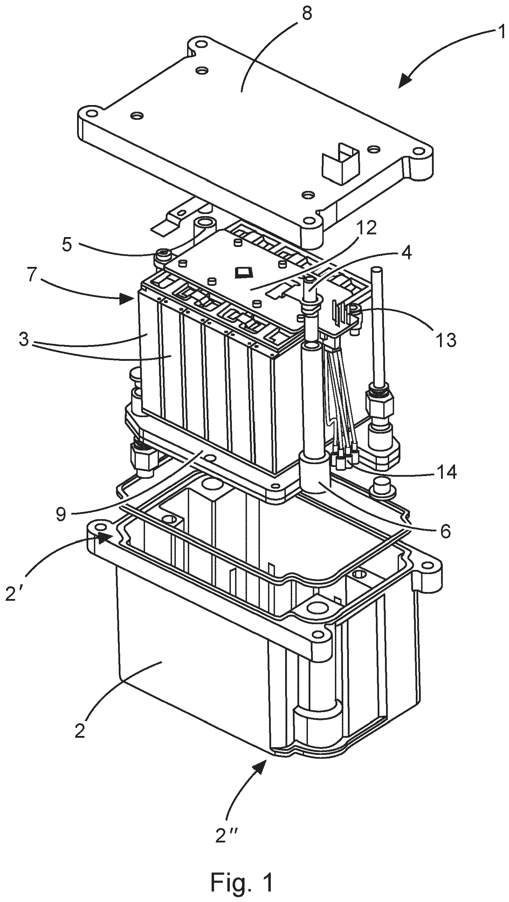

**Fig. 1** shows an exploded view of a battery module 1. The battery module 1 comprises a module housing 2 having a horizontal upper side 2' and a horizontal lower side 2".

The battery module 1 further comprises battery cells 3 accommodated in the module housing 2 and stacked side-by-side in a horizontal direction.

The battery module 1 comprises a first module upper connector 4 and a second module upper connector 5 on the horizontal upper side 2'. The first module upper connector 4 and the second module upper connector 5 are connected to the battery cells 3 and provide a voltage of the battery module 1. Further, the battery module 1 comprises a first module lower connector 6 and a second module lower connector 7 on the horizontal lower side 2". The first module lower connector 6 is electrically connected to the first module upper connector 4 and the second module lower connector 7 is electrically connected to the second module upper connector 5.

The first module upper connector 4 is placed in a first module upper connector location and the second module upper connector 5 is placed in a second module upper connector location. The first module lower connector 6 is placed in a first module lower connector location and the second module lower connector 7 is placed in a second module lower connector location. The first module upper connector location horizontally corresponds to the first module lower connector location and the second module upper connector location horizontally corresponds to the second module lower connector location.

The first module upper connector 4 has a shape to fit to the first module lower connector 6 and to the second module lower connector 7 to respectively create electrical contact. The second module upper connector 5 has a shape to fit to the second module lower connector 7 and to the first module lower connector 6 to respectively create electrical contact. The first module upper connector 4 and the second module upper connector 5 have the shape of a plug-in connector and the first module lower connector 6 and the second module lower connector 7 have the shape of a plug-in socket. In an alternative embodiment, the module upper connectors 4, 5 and the module lower connectors 6, 7 have other shapes, e.g., being formed as flat contacts creating the electrically contact.

The battery module 1 further comprises a cover plate 8 covering the horizontal upper side 2' of the module housing 2. In an alternative embodiment, the cover plate 8 is not provided, but the horizontal upper side 2' of the module housing 2 is covered, e.g., by a module housing 2 of a further battery module 1' located above the battery module 1.

Furthermore, the battery module 1 comprises a cooling plate 9 in thermal contact with the battery cells 3. As shown in Fig. 1, the cooling plate 9 is located underneath the battery cells 3 and is in thermal contact with the battery cells 3. In an alternative embodiment, the cooling plate 9 can be located, e.g., above the battery cells 3 or between the battery cells 3 as long as it is in thermal contact with the battery cells 3.

The cooling plate 9 is configured to let pass a heat transfer fluid. Thereto, the cooling plate 9 is provided with pipe fittings 10 to attach pipes 11 for flow of the heat transfer fluid. The heat transfer fluid is used to heat up or cool down the battery cells 3.

Moreover, in the battery housing 2, the battery module 1 comprises a Battery Management System 12 which processes signals of sensors of the battery module 1.

The battery module 1 comprises a module upper communication connector 13 and a module lower communication connector 14. The module upper communication connector 13 and the module lower communication connector 14 are connected to the Battery Management System 12. The module upper communication connector 13 is located in a defined horizontal communication connector location and orientation of the module upper communication connector 13 with respect to the first module upper connector 4 and the second module upper connector 5. The module lower communication connector 14 is located in a defined horizontal communication connector location and orientation of the module lower communication connector 14 with respect to the first module lower connector 6 and the second module lower connector 7.

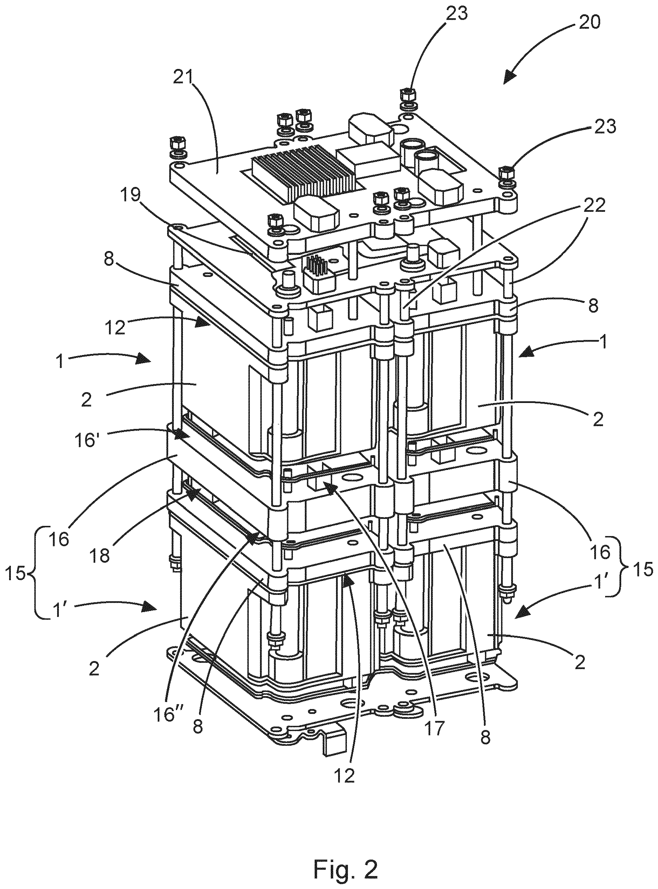

**FIG. 2** shows an exploded view of a configuration of a battery pack 20.

The battery pack 20 has a modular character and comprises an assembly 15 of a battery module 1, wherein, in this configuration, the battery module 1 is defined as assembly battery module 1', and of an interface plate 16 mounted on the assembly battery module 1'.

The battery pack 20 further comprises the battery module 1 located above the assembly 15. In this configuration, two battery modules 1 are provided respectively located above two assemblies 15 side-by-side.

The interface plate 16 is mounted on the assembly battery module 1' in the horizontal orientation and has an upper side 16' and a lower side 16". On the upper side 16', the interface plate 16 comprises a plate upper communication connector 17 and, on the lower side 16", the interface plate 16 comprises a plate lower communication connector 18. The plate upper communication connector 17 is electrically connected to the plate lower communication connector 18.

The interface plate 16 respectively allows an electrical connection between the first module upper connector 4 of the assembly battery module 1' and the second module lower connector 7 of the battery module 1 and between the second module upper connector 5 of the assembly battery module 1' and the first module lower connector 6 of the battery module 1. Thereto, the interface plate 16 has openings in horizontal locations corresponding to the first module upper connector location and the second module upper connector location with respect to the plate upper communication connector 17 and the plate lower communication connector 18 such that the first module upper connector 4 and the second module upper connector 5 can penetrate the interface plate 16. In alternative embodiments, the interface plate 16 is not provided with openings but it has contacts on the lower side and on the upper side such that a respective electrical contact through the interface plate 16 in the first module upper connector location and the second module upper connector location is provided.

The plate lower communication connector 18 has a shape to fit to the module upper communication connector 13 to create electrical contact and it is located in a defined horizontal plate lower communication connector location and orientation with respect to the first module upper connector 4 and the second module upper connector 5. The plate upper communication connector 17 has a shape to fit to the module lower communication connector 14 to create electrical contact and it is located in a defined horizontal plate upper communication connector location and orientation with respect to the first module lower connector 6 and the second module lower connector 7. The horizontal plate upper communication connector location is different from the horizontal plate lower communication connector location. The plate upper communication connector 17 fits to the module lower communication connector 14 of the above battery module 1 in a state when the battery module 1 is horizontally rotated about 180° with respect to the assembly battery module 1'. In alternative embodiments, the horizontal plate upper communication connector location and the horizontal plate lower communication connector location are also different with respect to each other, nevertheless, the battery module 1 and the assembly battery module 1' are not to be horizontally rotated about 180° but about another angle.

In the configuration shown in Fig. 2, wherein the battery module 1 is rotated about 180° with respect to the assembly battery module 1' and the battery module 1 is arranged on the assembly 15, the first module upper connector 4 of the assembly battery module 1' is in contact with the second module lower connector 7 of the battery module 1 and the second module upper connector 5 is isolated from the first module lower connector 6 such that, together with an according wiring, an electrical series circuit is provided in order to increase voltage of the system with respect to a single battery module 1.

In a configuration, not shown, wherein a lower battery module 1 and an upper battery module 1 are in the same orientation without being horizontally rotated, the first module upper connector 4 of the lower battery module 1 contacts the first module lower connector 6 of the upper battery module 1 and the second module upper connector 5 of the lower battery module 1 contacts the second module lower connector 7 of the upper battery module 1 such that an electrical parallel circuit is provided in order to increase capacity of the battery pack 20 with respect to a single battery module 1, and the module upper communication connector 13 of the lower battery module 1 directly contacts the module lower communication connector 14 of the upper battery module 1.

In a further configuration, not shown, the battery pack 20 comprises a further assembly 15, wherein the further assembly 15 is arranged at the bottom of the battery pack. The first module upper connector 4 of the further assembly 15 is in contact with the second module lower connector 7 of the assembly 15 on top of the further assembly 15 such that an electrical series circuit is provided in order to further increase voltage of the battery pack.

Therefore, the components of the battery pack 20 can be assembled in a modular manner, wherein the Battery Management Systems 12, busbars, and cell connectors are included in the battery modules 1 and/or in the assemblies 15 such that an easy configuration of the battery pack having the required characteristics is possible.

In the battery pack 20 shown in Fig. 2, the battery module 1 and the assembly 15 respectively forming a stack are arranged side by side. In an alternative embodiment, the stacks are formed by another configuration of battery modules 1 and/or assemblies 15 and/or only one stack is provided.

The battery pack 20 further comprises a main PCB 19 for BMS functions, such as controlling charging, discharging, balancing, and switching on and switching off of parallel connections of the battery modules 1. The main PCB 19 is in communication with the Battery Management Systems 12 in the battery modules 1 and in the assembly battery modules 1'.

A cover 21 of the main PCB 19, the cover plates 8 of the module housings 2, the module housings 2 and the interface plates 16 stacked one above the other are attached to one another by bolting by means of threaded rods 22 and nuts 23, wherein for the sake of clarity, not all of the threaded rods 22 and nuts 23 are provided with the reference signs. In alternative embodiments, the components are attached to one another, e.g., by clamping.

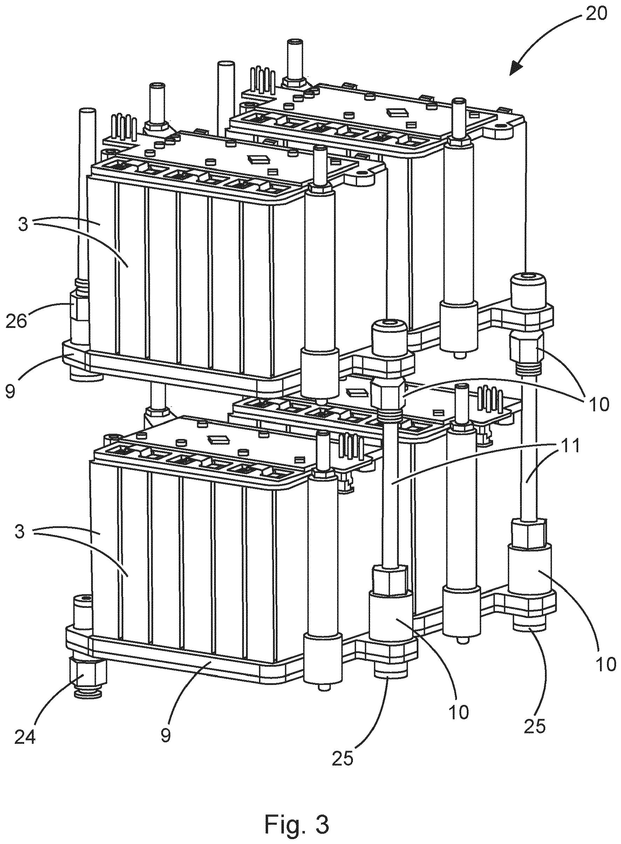

**Fig. 3** shows an exploded view of a configuration of the battery pack 20 of Fig. 2 depicting components of a thermal management system.

For the sake of clarity, the module housings 2, the interface plates 16 and the threaded rods 22 and nuts 23 have been omitted.

The cooling plates 9 are provided with terminals on the upper side and on the lower side outside the area where the battery cells 3 contact the cooling plate 9. On one of the upper side and of the lower side of the cooling plates, the cooling plates 9 are provided with the pipe fittings 10 or an inlet fitting 24 or an outlet fitting 26, and on the opposite side of the upper side and the lower side, the cooling plates 9 are provided with closing plugs 25. The cooling plates 9 are connected to one another by the pipes 11 connected by means of the pipe fittings 10. The pipe fittings 10 comprise quick connectors, wherein, in alternative embodiments, the pipe fittings 10 comprise screwed connectors.

By this configuration, the heat transfer fluid flows into a lower cooling plate 9 through the inlet fitting 24, passes through the lower cooling plate 9 while transferring heat to or from the battery cells 3 and flows via the pipe fittings 10 through the pipe 11 into an above cooling plate 9. In this above cooling plate 9, heat is again transferred to or from the battery cells 3 and the heat transfer fluid flows out of the cooling plate 9 through the outlet fitting 26. Due to the fact that this configuration is modular, this thermal management system can be extended in a modular manner. In an alternative embodiment, the thermal management system is not provided.

### LIST OF REFERENCE SIGNS

- 1: battery module
- 1': assembly battery module
- 2: module housing
- 2': horizontal upper side of module housing
- 2": horizontal lower side of module housing
- 3: battery cell
- 4: first module upper connector
- 5: second module upper connector
- 6: first module lower connector
- 7: second module lower connector
- 8: cover plate
- 9: cooling plate
- 10: pipe fitting
- 11: pipe
- 12: Battery Management System
- 13: module upper communication connector
- 14: module lower communication connector
- 15: assembly
- 16: interface plate
- 16': upper side of interface plate
- 16": lower side of interface plate
- 17: plate upper communication connector
- 18: plate lower communication connector
- 19: main PCB
- 20: battery pack
- 21: cover of main PCB
- 22: threaded rod
- 23: nut
- 24: inlet fitting
- 25: closing plug
- 26: outlet fitting

## Claims

1. A battery module (1) comprising
battery cells (3),
a module housing (2) having a horizontal upper side (2') and a horizontal lower side (2") and accommodating the battery cells (3) stacked in a horizontal direction, and,
on the horizontal upper side of the module housing (2), a first module upper connector (4) and a second module upper connector (5) respectively connected to the battery cells (3) and configured to provide a voltage of the battery module (1), and
on the horizontal lower side of the module housing (2), a first module lower connector (6) electrically connected to the first module upper connector (4), and a second module lower connector (7) electrically connected to the second module upper connector (5),
wherein
the first module upper connector (4) is placed in a first module upper connector location and the second module upper connector (5) is placed in a second module upper connector location,
the first module lower connector (6) is placed in a first module lower connector location and the second module lower connector (7) is placed in a second module lower connector location,
the first module upper connector location horizontally corresponds to the first module lower connector location and the second module upper connector location horizontally corresponds to the second module lower connector location,
the first module upper connector (4) has a shape configured to fit to the first module lower connector (6) and to the second module lower connector (7) to respectively create electrical contact, and
the second module upper connector (5) has a shape configured to fit to the second module lower connector (7) to create electrical contact.

2. The battery module (1) of claim 1, further comprising
a cover plate (8) covering the horizontal upper side of the module housing (2).

3. The battery module (1) of claim 1 or 2, wherein
the first module upper connector (4) and the second module upper connector (5) have the shape of a plug and the first module lower connector (6), and the second module lower connector (7) have the shape of a socket.

4. The battery module (1) of anyone of the preceding claims, further comprising
a cooling plate (9) configured to be in thermal contact with the battery cells (3),
wherein
the cooling plate (9) is configured to let pass a heat transfer fluid, and
the cooling plate (9) is provided with a pipe fitting (10), in particular, a quick connector, configured to attach a pipe (11) for flow of the heat transfer fluid.

5. The battery module (1) of anyone of the preceding claims, further comprising
a Battery Management System (12), in the module housing (2), configured to process signals of sensors of the battery module (1),
a module lower communication connector (14), connected to the Battery Management System (12), on the lower side of the module housing (2) in a defined horizontal communication connector location with respect to the first module lower connector (6) and the second module lower connector (7), and
a module upper communication connector (13), connected to the Battery Management System (12), on the upper side of the module housing (2) in the same horizontal communication connector location with respect to the first module upper connector (4) and the second module upper connector (5).

6. An assembly (15) of a battery module (1) of claim 5 and an interface plate (16), wherein
the battery module (1) is defined as an assembly battery module (1'), and
the interface plate (16), configured to be mountable on the assembly battery module (1') in a horizontal orientation and having an upper side and a lower side, comprises
a plate upper communication connector (17) on the upper side of the interface plate (16), and
a plate lower communication connector (14) on the lower side of the interface plate (16), wherein
the plate upper communication connector (17) is electrically connected to the plate lower communication connector (18),
the plate lower communication connector (18) has a shape configured to fit to the module upper communication connector (13) to create electrical contact and is located in a defined horizontal plate lower communication connector location with respect to the first module upper connector (4) and the second module upper connector (5), and
the plate upper communication connector (17) has a shape configured to fit to the module lower communication connector (14) to create electrical contact and the plate upper communication connector (17) is located in a defined horizontal plate upper communication connector location with respect to the first module lower connector (6) and the second module lower connector (7), and
the horizontal plate upper communication connector location is different from the horizontal plate lower communication connector location.

7. A battery pack (20) of at least two battery modules (1) of anyone of the claims 1 to 5, wherein the battery modules (1) are arranged one above the other such that
the first module upper connector (4) of a lower battery module (1) contacts the first module lower connector (6) of an upper battery module (1) and the second module upper connector (5) of the lower battery module (1) contacts the second module lower connector (7) of the upper battery module (1) such that an electrical parallel circuit is provided in order to increase capacity of the battery pack with respect to a single battery module (1), and
a module upper communication connector (13) of the lower battery module (1) is configured to contact a module lower communication connector (14) of the upper battery module (1).

8. A battery pack (20) of at least one battery module (1) of anyone of the claims 1 to 5 and at least one assembly (15) of claim 6, wherein one of the at least one battery module (1) is arranged on one of the at least one assembly (15) such that
the first module upper connector (4) of the assembly battery module (1') is in electrical contact with the second module lower connector (11) of the battery module (1) such that an electrical series circuit is provided in order to increase voltage of the battery pack (20) with respect to a single battery module (1).

9. The battery pack (20) of claim 8, wherein
the interface plate (16) is configured to allow an electrical connection between the first module upper connector (4) of the assembly battery module (1') and the second module lower connector (7) of the battery module (1).

10. The battery pack (20) of claim 9, wherein
the interface plate (16) has an opening at a horizontal location corresponding to the first module upper connector location such that the first module upper connector (4) can penetrate the interface plate (16).

11. The battery pack (20) of anyone of claims 8 to 10, wherein
the battery pack (20) comprises a further assembly (15) of claim 6, wherein the further assembly (15) is arranged at the bottom of the battery pack (20), and
the first module upper connector (4) of the further assembly (15) is in electrical contact with the second module lower connector (7) of the assembly (15) on top of the further assembly (15) such that an electrical series circuit is provided in order to further increase voltage of the battery pack (20).

12. The battery pack (20) of anyone of claims 9 to 11, wherein
the at least one battery module (1) and the at least one assembly (15) are arranged side by side.

13. The battery pack (20) of anyone of claims 7 to 12, wherein
the battery pack (20) comprises a main PCB (19) configured to be in communication with the Battery Management Systems (12) of the battery modules (1), and configured to control charging, discharging, balancing, and switching on and off parallel connections of the battery modules (1).

14. The battery pack (20) of anyone of claims 7 to 13, wherein
the connectors (4, 5, 6, 7, 13, 14) are formed by plug-in connectors.

15. The battery pack (20) of anyone of claims 7 to 14, wherein
the module housings (2) and/or the interface plates (16) and/or a cover (21) of the main PCB are attached to one another by bolting.
